# FASCICULE DE BREVET EUROPEEN

(11) **EP 2 003 384 B1**
(45) Date de publication et mention de la délivrance du brevet: **17.08.2011**
(21) Numéro de dépôt: 08158061.5
(22) Date de dépôt: 11.06.2008
(51) Int. Cl.: F16L 13/06, F16L 23/024

(54) **Système de raccordement comprenant des moyens de fixation de sécurité**
Anschlusssystem, das Sicherheitsbefestigungselemente umfasst
Connection system comprising safety attachment means

(30) Priorité: 11.06.2007 FR 0755636
(43) Date de publication de la demande: 17.12.2008
(73) Titulaire: Turbomeca, 64510 Bordes (FR)
(72) Inventeur: Auzias, Benoit, 64800 Asson (FR); Criado, Francis, 64000 Pau (FR); Senger, Gérald, 64160 Morlaas-Berlanne (FR)
(74) Mandataire: Balesta, Pierre

(56) Documents cités:
- FR-A- 754 873
- US-A- 6 082 783
- US-A1- 2004 239 103

## Description

La présente demande concerne le domaine des systèmes de raccordement pour conduite utilisés notamment mais pas exclusivement dans un turbomoteur d'hélicoptère.

La présente invention concerne plus particulièrement un système de raccordement comportant un raccord destiné à être fixé à une extrémité d'une conduite par l'intermédiaire d'une liaison de fixation.

Classiquement un tel système de raccordement permet de raccorder la conduite à un organe du turbomoteur afin d'alimenter l'organe en fluide, tel du liquide ou du gaz, par exemple dans le but d'amener de l'air sous pression vers des parties chaudes du turbomoteur pour leur refroidissement.

Il est bien connu par ailleurs que la liaison de fixation d'un raccord monté sur les turbomoteurs subit des contraintes mécaniques sévères du fait des vibrations générées par le fonctionnement du turbomoteur, ce qui peut avoir pour conséquence néfaste d'entrainer l'endommagement de la liaison de fixation et la rupture de la jonction.

Pour pallier à ce risque de rupture, il est connu de doubler le nombre de conduites et de raccords nécessaires afin de maintenir une alimentation en fluide en cas de rupture d'une jonction, la conduite redondante assurant alors seule l'alimentation en fluide.

La redondance des conduites présente cependant un certain nombre d'inconvénients comme le coût, la masse supplémentaire, l'encombrement et la maintenance.

Il est aussi connu de US 2004/239103 un dispositif pour limiter la séparation entre deux conduites d'un aéronef.

Un but de la présente invention est de fournir un système de raccordement sécurisé exempt des inconvénients cités ci-dessus permettant d'assurer la continuité de l'alimentation en fluide malgré l'endommagement ou la rupture de la liaison de fixation.

L'invention atteint son but par le fait que le système de raccordement conforme à l'invention comporte en outre des moyens de fixation de sécurité se présentant sous la forme d'un manchon entourant la liaison de fixation et comprenant une première extrémité destinée à être soudée à la conduite, ainsi qu'une seconde extrémité formant crochet destinée à coopérer avec le raccord de telle manière que le crochet est apte à assurer la fixation entre le raccord et la conduite en cas d'endommagement de la liaison de fixation pour garantir l'alimentation en fluide avec une fuite minimum.

Ainsi, grâce à la présente invention, les moyens de fixation de sécurité sont aptes à se substituer à la liaison de fixation afin d'assurer la fixation entre le raccord et la conduite.

Contrairement aux dispositifs de l'art antérieur, il n'est donc pas nécessaire de prévoir des conduites redondantes, les moyens de fixation de sécurité, par l'intermédiaire du crochet, reprenant avantageusement la fonction de fixation en cas d'endommagement de la liaison de fixation.

Préférentiellement, la périphérie du manchon est pourvue d'ouvertures permettant à un opérateur extérieur de voir la liaison de fixation, lorsque le manchon est fixé à la conduite. Cela permet avantageusement à un mécanicien de visualiser l'état de la liaison de fixation et, le cas échéant de détecter visuellement si cette dernière est endommagée.

Grâce à l'invention, il n'est donc pas nécessaire de démonter les moyens de fixation de sécurité pour diagnostiquer une détérioration de la liaison de fixation.

De manière préférentielle, le crochet est apte à assurer la fixation entre le raccord et la conduite uniquement en cas d'endommagement de la liaison de fixation.

Ainsi, tant que la liaison de fixation assure sa fonction de fixation, les moyens de fixation de sécurité ne contribuent pas à assurer la fixation entre le raccord et la conduite si bien que, de manière avantageuse, ils ne sont pas sollicités mécaniquement.

Autrement dit, les moyens de fixation de sécurité ne travaillent pas tant que la liaison de fixation est intacte ou, à tout le moins, est très faiblement endommagée.

Il en résulte que l'on préserve avantageusement la capacité de résistance mécanique des moyens de fixation de sécurité pour ne l'utiliser que lorsque la liaison de fixation est endommagée.

De préférence, la première extrémité du manchon est soudée à la conduite par une unique soudure annulaire, qui permet une fixation simple et rapide.

Au sens de l'invention, on entend par « endommagé » un état dans lequel la liaison de fixation n'assure plus sa fonction de fixation. Cet état pouvant apparaître avant la rupture de la liaison.

On comprend donc que selon la présente invention, les moyens de fixation de sécurité sont aptes à reprendre la fixation de la conduite sur le raccord en cas d'endommagement de la liaison de fixation.

Dès lors que la liaison de fixation est endommagée au point de ne plus pouvoir assurer sa fonction de fixation, le crochet engage le raccord pour le maintenir. Comme les moyens de fixation de sécurité sont eux-mêmes fixés à la conduite, il s'ensuit que l'on rétablit avantageusement la fixation entre la conduite et le raccord.

Ainsi, selon l'invention, les moyens de fixation de sécurité sont à même d'assurer la fixation du raccord et de la conduite, leur capacité de résistance mécanique n'ayant pas été affectée par les contraintes subies par la liaison de fixation, lesquelles ont été à l'origine de l'endommagement de ladite liaison.

On comprend ainsi que la présente invention permet de se dispenser avantageusement de conduites redondantes.

De manière avantageuse, en l'absence d'endommagement de la liaison de fixation, il existe un jeu entre le crochet et le raccord.

Ainsi, en l'absence d'endommagement, c'est-à-dire lors du fonctionnement normal du système de raccordement, il n'y a pas de contact entre le raccord et les moyens de fixation de sécurité, en conséquence de quoi, les moyens de fixation de sécurité ne travaillent pas.

Selon un mode de réalisation avantageux, en cas d'endommagement de la liaison de fixation et notamment en cas de rupture de ladite liaison de fixation, les moyens de fixation de sécurité se déplacent par rapport au raccord d'une distance au plus égal au jeu, de telle sorte que le crochet vient en contact du raccord de manière à immobiliser le raccord par rapport aux moyens de fixation de sécurité. Lesdits moyens étant fixés à la conduite, on comprend que la conduite et le raccord sont à nouveau fixés l'un à l'autre par l'entremise du crochet.

En outre, le jeu constitue ici la distance maximale de déplacement relatif entre le raccord et la conduite.

Avantageusement, ledit jeu est un jeu axial selon la direction axiale d'une portion cylindrique, laquelle est destinée à s'emmancher sur l'extrémité de la conduite.

De préférence, la longueur de la portion cylindrique est au moins égale au jeu, de telle sorte que la conduite ne se désemmanche pas du raccord en cas d'endommagement de la liaison de fixation.

Aussi, de manière préférentielle le jeu est compris entre 0,1 et 0,5 mm.

Un intérêt de cette valeur de jeu, est que le crochet est apte à engager rapidement le raccord lors de l'endommagement de la liaison de fixation, et, inversement, est suffisante pour éviter que le crochet ne vienne en contact avec le raccord lors du fonctionnement « normal ».

Ce jeu pourrait également être radial ou angulaire sans sortir du cadre de la présente invention, étant entendu que les adjectifs « axial », « radial » et « angulaire » sont considérés ici par rapport à un axe de l'extrémité de la conduite.

Avantageusement, la liaison de fixation est une soudure annulaire et, de préférence, elle est réalisée entre la portion cylindrique et la conduite.

Aussi, de préférence, la première extrémité du manchon est soudée à la surface extérieure de la conduite.

Selon un premier mode de réalisation de la présente invention, la seconde extrémité formant crochet est destinée à être maintenue axialement entre le raccord et une plaque de maintien.

De préférence, la plaque de maintien est fixée au raccord après que la première extrémité des moyens de fixation de sécurité a été fixée à la conduite.

De préférence, la seconde extrémité formant crochet comporte une pluralité de pattes de fixation destinées à s'étendre axialement autour d'une portion cylindrique s'étendant depuis le raccord.

En l'espèce, deux pattes adjacentes délimitent une ouverture laissant voir la liaison de fixation.

De préférence, le système de raccordement selon ce premier mode de réalisation comprend un raccord droit, c'est-à-dire que la direction du fluide sortant du raccord est sensiblement parallèle à celle du fluide y entrant.

Selon un deuxième mode de réalisation de la présente invention, la seconde extrémité formant crochet se présente sous la forme d'une bague dont le pourtour intérieur est muni d'ergots.

De préférence, les ergots s'étendent radialement par rapport aux moyens de fixation de sécurité formant manchon.

De préférence, le système de raccordement selon ce deuxième mode de réalisation comprend un raccord coudé, c'est-à-dire que la direction du fluide sortant du raccord forme un angle avec celle du fluide y entrant.

Aussi, selon ce deuxième mode de réalisation, le raccord comporte une portion cylindrique pour emmancher l'extrémité de la conduite, ladite portion cylindrique comporte une première nervure annulaire et les ergots sont aptes à venir en butée contre la première nervure annulaire lors d'un endommagement de la liaison de fixation afin d'empêcher le désemmanchement de la conduite.

Selon un aspect avantageux du deuxième mode de réalisation de la présente invention, ladite portion cylindrique comporte en outre une seconde nervure annulaire de telle sorte que les première et seconde nervures annulaires délimitent une gorge dans laquelle les ergots sont aptes à s'engager afin de maintenir le manchon sur le raccord lors de sa fixation à la conduite.

De préférence, les première et seconde nervures annulaires ensembles avec les ergots forment un système de verrouillage à baïonnette dont l'intérêt est de pouvoir maintenir le manchon lors de sa fixation à la conduite.

L'invention sera mieux comprise et ses avantages apparaîtront mieux à la lecture de la description qui suit, de modes de réalisation indiqués à titre d'exemples non limitatifs. La description se réfère aux dessins annexés sur lesquels :
- la figure **1** représente une vue en perspective d'un système de raccordement selon le premier mode de réalisation de l'invention, un raccord étant soudé à la conduite tandis que l'on amène les moyens de fixation de sécurité pour les faire coopérer avec le raccord ;
- la figure **2** représente une vue en perspective du système de raccordement selon le premier mode de réalisation de l'invention, les moyens de fixation de sécurité étant soudés à la conduite et solidarisés avec le raccord ;
- la figure **3** représente une vue en perspective du système de raccordement selon un deuxième mode de réalisation de l'invention, le raccord étant soudé à la conduite tandis que l'on amène les moyens de fixation de sécurité formant manchon pour les faire coopérer avec des nervures annulaires disposées sur une portion cylindrique du raccord ;
- la figure **4** représente une vue en perspective du deuxième mode de réalisation de l'invention, les moyens de fixation de sécurité étant engagés avec le raccord puis soudés à la conduite;
- la figure **5** représente une vue en perspective du manchon du raccord selon le deuxième mode de réalisation de l'invention ; et
- la figure **6** représente une vue de détail en coupe transversale du manchon du raccord selon le deuxième mode de réalisation de l'invention, montrant la position relative de la première nervure annulaire avec la seconde extrémité formant crochet.

Les systèmes de raccordement qui vont être décrits en détail ci-après sont notamment mais pas exclusivement destinés à connecter des conduites d'air pressurisé à des organes d'un turbomoteur d'hélicoptère.

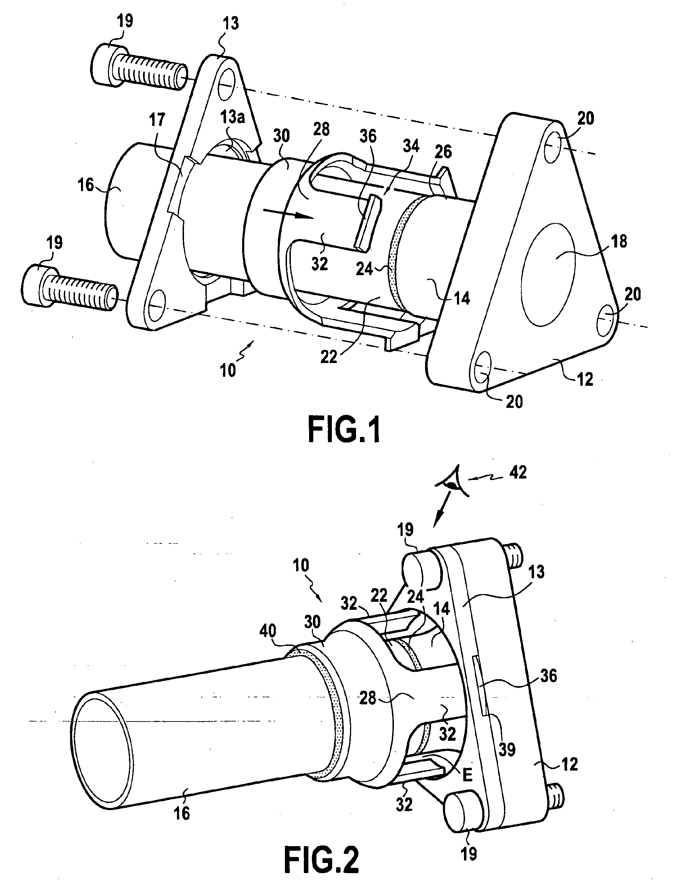

A l'aide des figures **1** et **2****,** on va tout d'abord décrire un système de raccordement **10** selon le premier mode de réalisation de l'invention.

Le système de raccordement **10** comporte un raccord **12** d'où s'étend une portion cylindrique creuse **14,** cette dernière étant destinée à venir s'emmancher sur une conduite **16** pour réaliser la connexion entre le système de raccordement **10** et la conduite **16.**

En l'espèce, le raccord **12** présente une forme en triangle dont les coins sont arrondis. On pourrait toutefois prévoir une autre forme sans sortir du cadre de la présente invention.

Le raccord **12** est traversé par un perçage **18** communiquant de manière coaxiale avec la portion cylindrique creuse **14.**

Comme on le voit sur la figure **1****,** le raccord **12** comporte une pluralité d'orifices **20** pour permettre le montage du raccord **12** sur l'organe à alimenter en air pressurisé, par exemple sur un carter du turbomoteur.

En se référant aux figures **1** et **2****,** on constate que le raccord **12** est destiné à être fixé à une extrémité **22** de la conduite **16** par l'intermédiaire d'une liaison de fixation **24** qui, en l'espèce, est une soudure annulaire **24** réalisée entre la surface périphérique de la conduite **16** et une extrémité **26** de la portion cylindrique **14.**

Dans ce premier mode de réalisation, on voit que le raccord **12** est un raccord droit, l'axe de l'extrémité de la conduite **16** étant sensiblement parallèle à l'axe du perçage **18.**

Conformément à l'invention, le raccord **12** comporte en outre des moyens de fixation de sécurité **28** qui présentent en l'espèce la forme d'un manchon **28** destiné à entourer la conduite **16.**

Le manchon **28** comporte une première extrémité **30** annulaire d'où s'étendent axialement trois pattes de fixation **32.**

Comme on l'a représenté sur la figure **1****,** le manchon **28** comporte en outre une seconde extrémité **34** constituée dans ce mode de réalisation par les extrémités des pattes de fixation **32.**

On constate sur cette figure **1****,** que chacune des extrémités des pattes de fixation **32** comporte une saillie **36** s'étendant radialement en formant crochet, de telle sorte que la seconde extrémité **34** du manchon **28** forme elle-même un crochet.

En se référant aux figures **1** et **2****,** on voit que le système de raccordement **10** comporte en outre une plaque de maintien **13** présentant la même forme triangulaire que celle du raccord **12.** Comme on le voit sur la figure **1****,** cette plaque de maintien **13** comporte un perçage **13a** centré sur l'axe de la conduite **16** de sorte qu'elle peut coulisser le long de la conduite **16.** Elle comporte aussi trois encoches **17** destinées à recevoir les extrémités formant crochet **34.**

En se référant à la figure **2****,** on comprend que le manchon **28,** au cours de son montage, coulisse sur la conduite vers le raccord de sorte que les saillies **36** des pattes de fixation **32** viennent en appui sur le raccord **12.**

Ensuite, on amène la plaque de maintien **13** contre le raccord **12** en la faisant coulisser axialement de sorte que chacune des saillies **36** soit logée entre le raccord **12** et une encoche **17** de la plaque de maintien **13,** suite à quoi on solidarise la plaque de maintien **13** avec le raccord par exemple par le biais de vis **19.** Ainsi, le manchon **28** est maintenu entre le raccord **12** et la plaque de maintien **13,** les pattes de fixation **32** s'étendant alors selon la direction axiale de la portion cylindrique **14.**

De manière particulièrement avantageuse, la largeur axiale des lumières **39** définies par l'association des encoches **17** et du raccord **12** est plus grande que l'épaisseur axiale des saillies **36,** de telle sorte qu'il existe un jeu axial entre le manchon **28** et le raccord **12.**

De préférence mais non nécessairement, la longueur orthoradiale des lumières **39** est également plus grande que la longueur orthoradiale des saillies **36,** de telle sorte qu'il existe un jeu angulaire entre le raccord **12** et le manchon **28.**

Une fois que le manchon **28** est maintenu entre le raccord **12** et la plaque de maintien **13,** on fixe le manchon **28** sur la conduite **16,** de préférence par le biais d'une liaison soudée annulaire **40** réalisée entre la première extrémité **30** du manchon **28** et la surface périphérique de la conduite **16,** comme on l'a représenté sur la figure **2****.**

De préférence, on fixe le manchon **28** à la conduite **16** en prenant la précaution que les saillies **36** ne soient pas en contact avec les bords intérieurs des lumières **39.** Autrement dit, on s'arrange pour qu'en l'absence d'endommagement de la liaison de fixation **24,** il existe un jeu entre les saillies **36** formant crochet et les bords des lumières **39.**

Ainsi et de manière préférentielle, en l'absence d'endommagement, il n'y a pas de contact entre le manchon **28** et le raccord **12.**

En l'espèce, on prévoit un jeu axial selon la direction axiale de la portion cylindrique **14.** De préférence, le jeu est compris entre 0,1 et 0,5 mm.

Grâce à ce montage avantageux, le manchon **28** et, par suite, la soudure fixant le manchon **28** à la conduite **16** ne travaillent pas tant que la liaison de fixation **24** n'est pas endommagée.

En effet, dès lors que les saillies **36** formant crochet ne sont pas en contact avec le raccord, on comprend que lors du fonctionnement normal du système de raccordement **10,** aucun effort mécanique n'est exercé directement par le raccord **12** sur le manchon **28.**

Ainsi, en l'absence d'endommagement de la liaison de fixation **24,** le manchon **28** et plus particulièrement la soudure **40** fixant le manchon **28** à la conduite **16** ne subissent pas d'effort mécanique, contrairement à la liaison de fixation **24.** Il s'en suit que l'on préserve avantageusement la capacité de fixation des moyens de fixation de sécurité.

Inversement, en cas d'endommagement de la liaison de fixation **24,** et notamment en cas de rupture de ladite liaison, la conduite **16** tend à se désemmancher de la portion cylindrique **14,** en conséquence de quoi les saillies **36** formant crochet viennent en butée contre les bords des lumières **39** opérant ainsi le contact entre la seconde extrémité **34** du manchon **28** formant crochet et le raccord **12,** à la suite de quoi la seconde extrémité **34** du manchon **28** formant crochet assure la fixation entre le raccord **12** et la conduite **16,** étant rappelé que le manchon **28** est lui-même soudé à la conduite **16** par la soudure **40.**

Selon un autre aspect avantageux de l'invention, l'espace **E** délimité entre deux pattes de fixation adjacentes constitue une ouverture permettant à un opérateur extérieur **42,** par exemple un mécanicien chargé de l'entretien du turbomoteur, de voir la liaison de fixation **24,** lorsque le manchon **28** est fixé à la conduite.

Cela permet avantageusement de diagnostiquer l'état de la liaison de fixation **24** pour identifier un endommagement éventuel.

Sans sortir du cadre de la présente invention, on peut prévoir une variante dans laquelle le manchon est maintenu directement par ce raccord **12** en l'absence de plaque de maintien.

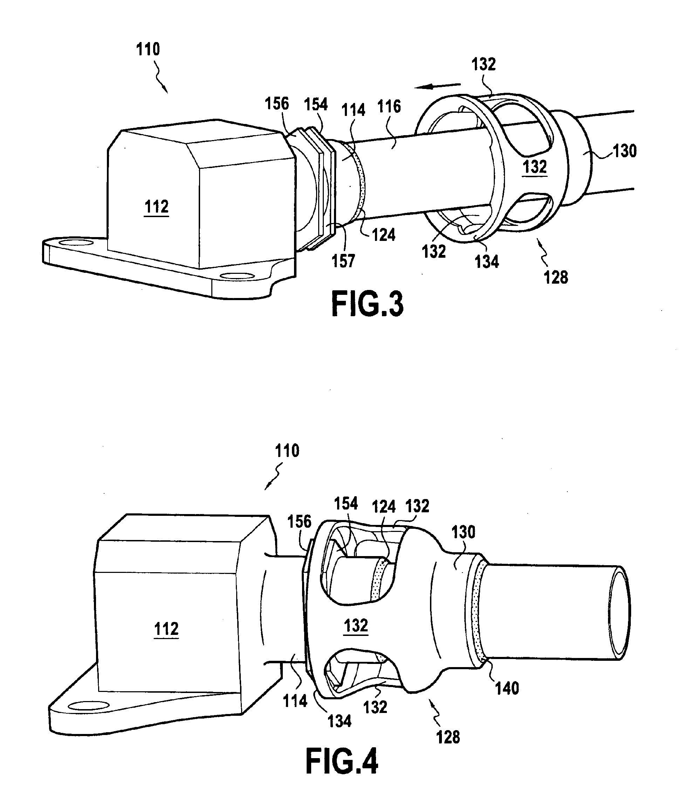

A l'aide des figures **3** à **6****,** on va maintenant décrire un deuxième mode de réalisation avantageux d'un système de raccordement **110** selon la présente invention.

Les éléments du deuxième mode de réalisation qui sont identiques à ceux du premier mode de réalisation, portent la même référence numérique, augmentée de la valeur **100.**

Sur la figure **3****,** on a représenté le système de raccordement **110** qui comprend un raccord **112** coudé à angle droit. Autrement dit, la direction du fluide entrant dans le raccord **112** forme un angle droit avec la direction du fluide sortant du raccord. Ce dispositif est applicable quelque soit la valeur de l'angle.

Tout comme dans le premier mode de réalisation, une portion cylindrique creuse **114** destinée à s'emmancher sur l'extrémité d'une conduite **116** s'étend depuis le raccord **112.**

Le raccord **112** et la conduite **116** sont destinés à être fixe l'un à l'autre par l'intermédiaire d'une liaison de fixation **124** formant une soudure annulaire.

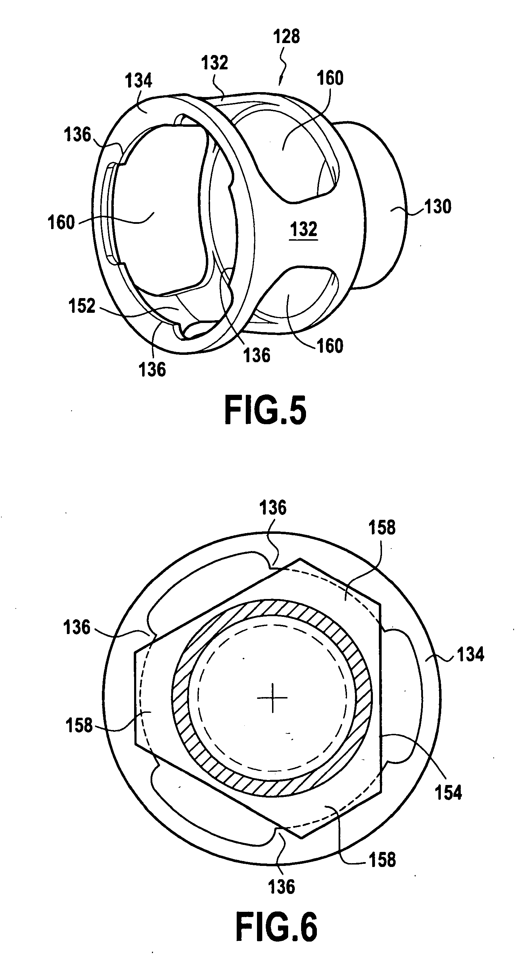

Conformément à l'invention, le système de raccordement **110** comporte en outre des moyens de fixation de sécurité **128** formant manchon. Ce manchon **128** est plus particulièrement visible sur la figure **5****.**

En se référant à la figure **5****,** on constate que le manchon **128** comporte une première extrémité **130** annulaire, une seconde extrémité **134** annulaire formant bague dont le pourtour intérieur est muni de trois ergots **136** disjoints s'étendant angulairement tout en faisant saillie radialement vers l'axe du manchon **128.** On conçoit donc que la seconde extrémité **134** du manchon **128** forme un crochet.

Les première et seconde extrémités **130, 134** sont reliées ensemble par l'intermédiaire de trois bras **132** s'étendant axialement.

Sur la figure **3****,** on a représenté le raccord **112** soudé à la conduite **116,** lorsque l'on amène le manchon **128** pour son montage sur le raccord **112.**

Comme on le voit sur cette figure, la portion cylindrique **114** comporte une première nervure annulaire **154** et, de préférence, une seconde nervure annulaire **156** coaxiale à la première nervure **154.**

Par ailleurs, la première nervure annulaire **154** comporte des ailes **158,** en l'espèce trois, faisant radialement saillie.

Sur l'exemple représenté ici, la seconde nervure **156** est similaire à la première nervure **154** bien que cela ne soit pas nécessaire.

A l'aide des figures **3** et **5****,** on va maintenant expliquer le montage du manchon **128.** Tout d'abord, le manchon **128** coulisse le long de la conduite **116** vers le raccord **112.**

Ensuite, le manchon **128** est positionné angulairement de telle sorte que chacun des ergots **136** se situe angulairement entre deux ailes **158,** si bien que l'on peut positionner axialement le manchon **128** de telle sorte que les ergots s'engagent dans une gorge **157** délimitée axialement entre les première et seconde nervures annulaires **154,156.**

Dès lors que les ergots **136** sont positionnés dans la gorge **157,** on pivote le manchon **128** autour de son axe jusqu'à la position angulaire représentée sur la figure **6****,** dans laquelle les ergots **136** sont dans la même position angulaire que les ailes **158.**

A l'aide de la figure **6****,** on comprend que dans cette position, le manchon **128** est maintenu axialement, ce qui rendra la fixation du manchon **128** à la conduite **116** plus aisée.

De manière particulièrement avantageuse, la distance axiale séparant les première et seconde nervures annulaire est supérieure à l'épaisseur axiale des ergots **136** de telle manière qu'il existe un jeu axial entre le raccord **112** et le manchon **128.** De préférence le jeu est compris entre 0,1 et 0,5 mm.

Lorsque le manchon est dans cette position, les ergots **136** n'étant de préférence pas en contact avec les première et seconde nervures **154, 156,** on fixe la première extrémité **130** du manchon **128** à la surface périphérique de la conduite **116** par le biais d'une soudure annulaire **140** comme on le voit bien sur la figure **4****.**

On comprend donc qu'en l'absence d'endommagement de la liaison de fixation **124,** de manière préférentielle, la seconde extrémité **134** formant crochet du manchon **128** n'est pas en contact avec les nervures du raccord **112** tant et si bien que le manchon **128** ne travaille pas.

A l'inverse, dès lors que la liaison de fixation **124** est endommagée, la conduite **116** tend à se désemmancher de la portion cylindrique **114,** notamment à cause des vibrations générées par le turbomoteur. Il en résulte un déplacement axial du manchon **128,** ledit déplacement axial étant avantageusement limité du fait du blocage axial réalisé par le contact entre les ergots **136** du manchon **128** et ailes **158** des nervures annulaires **154,156** du raccord **112.**

En d'autres termes, les ergots **136** formant crochet sont aptes à assurer la fixation entre le raccord **112** et la conduite **116** en cas d'endommagement de la liaison de fixation **124.**

Par ailleurs, on constate sur la figure **4** que la surface périphérique du manchon est pourvue d'ouvertures **160** délimitées entre deux bras **132** adjacents.

Tout comme dans le premier mode de réalisation, ces ouvertures **160** permettent à un opérateur extérieur du voir la liaison de fixation **124,** lorsque le manchon **128** est fixé à la conduite **116,** avantageusement afin de diagnostiquer un éventuel endommagement de la liaison.

L'invention concerne enfin une turbomachine, tel un turbomoteur, comportant un système de raccordement conforme à la présente invention.

## Revendications

1. Système de raccordement (10,110) comprenant un raccord (12, 112) destiné à être fixé à une extrémité d'une conduite (16,116) par l'intermédiaire d'une liaison de fixation (24,124), **caractérisé en ce qu'**il comporte en outre des moyens de fixation de sécurité (28,128) se présentant sous la forme d'un manchon (28,128) entourant la liaison de fixation (24,124) et comprenant une première extrémité (30,130) destinée à être soudée à la conduite, ainsi qu'une seconde extrémité formant crochet (34,134) destinée à coopérer avec le raccord (12,112) de telle manière que le crochet (34,134) est apte à assurer la fixation entre le raccord et la conduite en cas d'endommagement de la liaison de fixation (24,124).

2. Système de raccordement selon la revendication **1, caractérisé en ce qu'**en l'absence d'endommagement de la liaison de fixation (24,124), il existe un jeu entre le crochet (34,134) et le raccord (12,112).

3. Système de raccordement selon la revendication **2, caractérisé en ce que** ledit jeu est un jeu axial selon la direction axiale d'une portion cylindrique (14,114), laquelle est destinée à s'emmancher l'extrémité de la conduite (16,116).

4. Système de raccordement selon la revendication **2** ou **3, caractérisé en ce que** le jeu est compris entre 0,1 et 0,5 mm.

5. Système de raccordement selon l'une quelconque des revendications **1** à **4, caractérisé en ce que** la liaison de fixation (24,124) est une soudure annulaire.

6. Système de raccordement selon l'une quelconque des revendications **1** à **5, caractérisé en ce que** la périphérie du manchon est pourvue d'ouvertures (E, 160) permettant à un opérateur extérieur de voir la liaison de fixation (24,124), lorsque le manchon (28,128) est fixé à la conduite (16,116).

7. Système de raccordement selon l'une quelconque des revendications **1** à **6, caractérisé en ce que** la seconde extrémité formant crochet (34) est destinée à être maintenue axialement entre le raccord (12) et une plaque de maintien (13).

8. Système de raccordement selon la revendication **7, caractérisé en ce que** la seconde extrémité formant crochet (34) comporte une pluralité de pattes de fixation (32) destinées à s'étendre axialement autour d'une portion cylindrique (14) s'étendant depuis le raccord (12).

9. Système de raccordement selon l'une quelconque des revendications **1** à **8, caractérisé en ce que** la seconde extrémité formant crochet (134) se présente sous la forme d'une bague dont le pourtour intérieur est muni d'ergots (136).

10. Système de raccordement selon la revendication **9, caractérisé en ce qu'**il comprend une portion cylindrique (114) pour emmancher l'extrémité de la conduite (116), **en ce que** ladite portion cylindrique comporte une première nervure annulaire (154) et **en ce que** les ergots (136) sont aptes à venir en butée contre la première nervure annulaire lors d'un endommagement de la liaison de fixation (124) afin d'empêcher le désemmanchement de la conduite (116).

11. Système de raccordement selon la revendication **10, caractérisé en ce que** ladite portion cylindrique (114) comporte en outre une seconde nervure annulaire (156) de telle sorte que les première et seconde nervures annulaires délimitent une gorge (157) dans laquelle les ergots (136) sont aptes à s'engager afin de maintenir le manchon (128) sur le raccord (112) avant la fixation du manchon (128) à la conduite (116).

12. Turbomachine, **caractérisée en ce qu'**elle comporte un système de raccordement selon l'une quelconque des revendications **1** à **11.**

## Claims

1. A coupling system (10, 110) comprising a coupling (12, 112) for fastening to one end of a pipe (16, 116) via a fastening connection (24, 124), the system being **characterized in that** it further comprises safety fastener means (28, 128) in the form of a sleeve (28, 128) surrounding the fastening connection (24, 124) and having a first end (30, 130) for welding to the pipe and a hook-forming second end (34, 134) for co-operating with the coupling (12, 112) in such a manner that the hook (34, 134) is suitable for providing fastening between the coupling and the pipe in the event of the fastening connection (24, 124) being damaged.

2. A coupling system according to claim 1, **characterized in that** in the absence of damage to the fastening connection (24, 124), clearance exists between the hook (34, 134) and the coupling (12, 112).

3. A coupling system according to claim 2, **characterized in that** said clearance is axial clearance in the axial direction of a cylindrical portion (14, 114) that is to be engaged with the end of the pipe (16, 116).

4. A coupling system according to claim 2 or claim 3, **characterized in that** the clearance lies in the range 0.1 mm to 0.5 mm.

5. A coupling system according to any one of claims 1 to 4, **characterized in that** the fastening connection (24, 124) is an annular weld.

6. A coupling system according to any one of claims 1 to 5, **characterized in that** the periphery of the sleeve is provided with openings (E, 160) enabling an external operator to see the fastening connection (24, 124) when the sleeve (28, 128) is fastened to the pipe (16, 116).

7. A coupling system according to any one of claims 1 to 6, **characterized in that** the hook-forming second end (34) is designed to be retained axially between the coupling (12) and a retention plate (13).

8. A coupling system according to claim 7, **characterized in that** the hook-forming second end (34) has a plurality of fastener tabs (32) for extending axially around a cylindrical portion (14) extending from the coupling (12).

9. A coupling system according to any one of claims 1 to 8, **characterized in that** the hook-forming second end (134) is in the form of a ring with its inner periphery provided with studs (136).

10. A coupling system according to claim 9, **characterized in that** it includes a cylindrical portion (114) for engaging the end of the pipe (116), **in that** said cylindrical portion includes a first annular rib (154), and **in that** the studs (136) are suitable for coming into abutment against the first annular rib in the event of damage to the fastening connection (124) so at to prevent the pipe (116) becoming disengaged.

11. A coupling system according to claim 10, **characterized in that** said cylindrical portion (114) further includes a second annular rib (156) such that the first and second annular ribs define a groove (157) in which the studs (136) are suitable for engaging so as to retain the sleeve (128) on the coupling (112) before the sleeve (128) is fastened to the pipe (116).

12. A turbomachine, **characterized in that** it includes a coupling system according to any one of claims 1 to 11.

## Patentansprüche

1. Anschlußsystem (10, 110) mit einem Verbindungsstück (12,112), das dazu bestimmt ist, mittels einer Befestigungsverbindung (24, 124) an einem Ende einer Leitung (16, 116) befestigt zu werden, **dadurch gekennzeichnet, daß** es ferner Sicherheitsbefestigungsmittel (28, 128) umfaßt, die in Form einer Muffe (28, 128) vorliegen, welche die Befestigungsverbindung (24, 124) umgibt und ein erstes Ende (30, 130), das dazu bestimmt ist, an die Leitung angeschweißt zu werden, sowie ein einen Haken bildendes zweites Ende (34, 134) umfaßt, das dazu bestimmt ist, mit dem Verbindungsstück (12, 112) derart zusammenzuwirken, daß der Haken (34, 134) geeignet ist, im Falle einer Beschädigung der Befestigungsverbindung (24, 124) die Befestigung zwischen dem Verbindungsstück und der Leitung zu gewährleisten.

2. Anschlußsystem nach Anspruch 1, **dadurch gekennzeichnet, daß** bei Nichtvorliegen einer Beschädigung der Befestigungsverbindung (24, 124) zwischen dem Haken (34, 134) und dem Verbindungsstück (12, 112) ein Spiel vorhanden ist.

3. Anschlußsystem nach Anspruch 2, **dadurch gekennzeichnet, daß** das Spiel ein axiales Spiel in axialer Richtung eines zylindrischen Abschnitts (14, 114) ist, der dazu bestimmt ist, auf das Ende der Leitung (16, 116) aufgeschoben zu werden.

4. Anschlußsystem nach Anspruch 2 oder 3, **dadurch gekennzeichnet, daß** das Spiel zwischen 0,1 und 0,5 mm beträgt.

5. Anschlußsystem nach einem der Ansprüche 1 bis 4, **dadurch gekennzeichnet, daß** die Befestigungsverbindung (24, 124) eine ringförmige Schweißnaht ist.

6. Anschlußsystem nach einem der Ansprüche 1 bis 5, **dadurch gekennzeichnet, daß** der Umfang der Muffe mit Öffnungen (E, 160) versehen ist, die einer außen stehenden Bedienungsperson ermöglichen, die Befestigungsverbindung (24, 124) zu sehen, wenn die Muffe (28, 128) an der Leitung (16, 116) befestigt ist.

7. Anschlußsystem nach einem der Ansprüche 1 bis 6, **dadurch gekennzeichnet, daß** das einen Haken bildende zweite Ende (34) dazu bestimmt ist, zwischen dem Verbindungsstück (12) und einer Halteplatte (13) axial gehalten zu werden.

8. Anschlußsystem nach Anspruch 7, **dadurch gekennzeichnet, daß** das einen Haken bildende zweite Ende (34) eine Vielzahl von Befestigungslaschen (32) umfaßt, die dazu bestimmt sind, um einen sich von dem Verbindungsstück (12) aus erstreckenden zylindrischen Abschnitt (14) herum axial zu verlaufen.

9. Anschlußsystem nach einem der Ansprüche 1 bis 8, **dadurch gekennzeichnet, daß** das einen Haken bildende zweite Ende (34) in Form eines Rings vorliegt, dessen Innenumfang mit Vorsprüngen (136) versehen ist.

10. Anschlußsystem nach Anspruch 9, **dadurch gekennzeichnet, daß** es einen zylindrischen Abschnitt (114) umfaßt, um das Ende der Leitung (116) anzusetzen, daß der zylindrische Abschnitt eine erste ringförmige Rippe (154) aufweist und daß die Vorsprünge (136) geeignet sind, bei einer Beschädigung der Befestigungsverbindung (124) an der ersten ringförmigen Rippe in Anschlag zu gelangen, um das Herausrutschen der Leitung (116) zu verhindern.

11. Anschlußsystem nach Anspruch 10, **dadurch gekennzeichnet, daß** der zylindrische Abschnitt (114) ferner eine zweite ringförmige Rippe (156) aufweist, derart, daß die erste und die zweite ringförmige Rippe eine Nut (157) begrenzen, in die die Vorsprünge (136) einzugreifen in der Lage sind, um vor der Befestigung der Muffe (128) an der Leitung (116) die Muffe (128) an dem Verbindungsstück (112) zu halten.

12. Turbomaschine, **dadurch gekennzeichnet, daß** sie ein Anschlußsystem nach einem der Ansprüche 1 bis 11 umfaßt.
